# EUROPEAN PATENT APPLICATION

(11) **EP 3 575 949 A1**
(43) Date of publication of application: **04.12.2019**
(21) Application number: 18174598.5
(22) Date of filing: 28.05.2018
(51) Int. Cl.: G06F 3/12, G06Q 30/06, G06Q 50/18

(54) **SYSTEM AND METHOD FOR COMMUNICATION BETWEEN A CONSUMER ENTITY AND A PRINT JOB FULFILLER ENTITY**

(71) Applicant: OCE Holding B.V., 5914 CA Venlo (NL)
(72) Inventor: DUNGA, Claudiu A., 5914 CA Venlo (NL); CHISE, Cosmina, 5914 CA Venlo (NL)
(74) Representative: OCE IP Department

(57) **Abstract**

The invention provides a system (1000) for communication between a costumer entity, CE (10), and a print job fulfiller entity, PFE (20), comprising:
a first interface (1) adapted for receiving a print job issued by the CE (10) for the PFE (20);
a second interface (2) adapted for receiving information regarding a status of the PFE (20) from the PFE (20);
a control device (100) configured to generate and adapt a graphical representation (40) of the progress of the print job over time;
wherein the graphical representation (40) comprises a first section (41) indicating statuses attributed to the CE (10), and a second section (42, 43) indicating statuses attributed to the PFE (20);
wherein the control device (100) is configured to generate and adapt the graphical representation (40) such that negotiation phases (47) which comprise a negotiation between the CE (10) and the PFE (20) are graphically indicated in both the first section (41) and the second section (42) of the graphical representation (40); and
wherein the control device (100) is further configured to output an output signal comprising the graphical representation (40) to the CE (10) and/or to the PFE (20).

## Description

### FIELD OF THE INVENTION

The present invention relates to a system and a method for communication between a consumer entity issuing a print job, and a print job fulfiller entity. The costumer entity and/or the print job fulfiller entity may comprise, or consist of, human users and/or automated devices.

### BACKGROUND ART

Print jobs comprise at least one image and usually, in addition, data relating to properties of the at least one image and/or to settings with which the images are to be printed. Some print jobs can be fulfilled by a single print job fulfiller entity, for example, by a single inkjet printer. A consumer entity, such as a desktop PC, may issue a print job, the inkjet printer receives the signal indicating the print job, automatically selects and retrieves an appropriate type of printing medium (e.g. paper) and fulfils the print job by printing the at least one image of the print job onto that medium. Such processes can usually be monitored by a user by watching a status indication on a monitor coupled to the desktop PC.

However, more complicated print jobs may require a series of steps that may or may not require human intervention. It is generally desired to monitor such complicated print jobs in order to provide information e.g. about which machines are currently occupied fulfilling the print job and the like.

US 2002/145 750 A1 describes a server site for supporting the course of producing one printing material typically with the cooperation of a plurality of parties of, for example, a publishing company, a printing company, a plate making company, a designer and the like.

Not all machines or persons may be able, free and/or qualified to fulfil certain jobs. US 2014/ 136268 A1 describes a method for validating feasibility of proposed contract provisions, comprising: obtaining a job request with a proposed contract provision at a validation engine; obtaining at said validation engine status information from a production monitoring engine that monitors production resources for executing said job request; and determining with said validation engine whether said proposed contract provision is feasible for executing said job request with said production resources.

During fulfilling of the print job, various obstacles can be encountered. For example, one or more automated devices may show an error, or another undesired situation may arise in which a stored amount of a necessary material is insufficient, a misunderstanding is rendered apparent, or a print job has been changed after its fulfilling has already started.

### SUMMARY OF THE INVENTION

It is therefore desirable to provide a system, and a method, for communication between entities involved in the issuing and/or the fulfilling of the print job that enables a faster and more informed way to deal with unexpected and/or undesired occurrences.

According to a first aspect, the invention provides a system for communication between a costumer entity and a print job fulfiller entity comprising:
a first interface adapted for receiving a print job issued by the costumer entity for the print job fulfiller entity;
a second interface adapted for receiving information regarding a status of the print job fulfiller entity from the print job fulfiller entity;
a control device configured to generate and adapt a graphical representation of the progress of the print job over time;
wherein the graphical representation comprises a first section indicating statuses and/or actions attributed to the costumer entity, and a second section indicating statuses and/or actions attributed to the print job fulfiller entity;
wherein the control device is configured to generate and adapt the graphical representation such that negotiation phases which comprise a negotiation between the costumer entity and the print job fulfiller entity are graphically indicated in both the first section and the second section of the graphical representation; and
wherein the control device is further configured to generate and output an output signal comprising the graphical representation to the consumer entity (e.g. via the first interface) and/or to the print job fulfiller entity (e.g. via the second interface).

According to a second aspect, the invention provides a method for communication between a costumer entity and a print job fulfiller entity comprising steps of:
receiving, by a control device (e.g. via a first interface), a print job issued by the costumer entity for the print job fulfiller entity;
receiving, by the control device (e.g. via a second interface), information regarding a status of the print job fulfiller entity from the print job fulfiller entity;
generating and/or adapting, by the control device, a graphical representation of the progress of the print job over time;
wherein the graphical representation comprises a first section indicating statuses and/or actions attributed to the costumer entity, and a second section indicating statuses and/or actions attributed to the print job fulfiller entity;
wherein the graphical representation is generated and/or adapted such that negotiation phases which comprise a negotiation between the costumer entity and the print job fulfiller entity are graphically indicated in both the first section and the second section of the graphical representation;
generating an output signal comprising the graphical representation; and
outputting the output signal to the costumer entity (e.g. via the first interface) and/or to the print job fulfiller entity (e.g. via the second interface).

In preferred embodiments, the graphical representation comprises exclusively the first and the second section, which are both realized as linear timelines arranged in parallel.

According to a third aspect, the invention provides a computer-readable storage medium comprising executable program code configured to, when executed, perform the method of the second aspect. The software medium may be used to create, or enable, a system according to the first aspect.

According to a fourth aspect, the invention provides a computer program product comprising executable program code configured to, when executed, perform a method according to the second aspect of the present invention.

By showing the negotiation phases explicitly, potential bottlenecks due to one entity, or one part of an entity, waiting for another entity, or part of the other entity, which may not even realize that its input is needed, may be avoided or at least be resolved faster.

The costumer entity may in some embodiments be a human user that requests a print job, for example a set of images to be printed together with their printing parameters. Printing parameters may comprise desired size, desired types of inks, desired types of printing medium such as desired types of paper or of another substrate, and the like.

The human user may prepare the request at a device that is locally available at the same location as the control device, or may prepare the request at a remote device, i.e. a device at a location remote from the location of the control device. For example, the human user may use a mobile device such as a tablet PC, a laptop PC, a smartphone, a smart watch and the like, to generate the request for the print job.

The costumer entity may, in some embodiments, also be an automated machine such as a computer configured to automatically generate requests for print jobs.

The print job fulfiller entity may comprise a plurality of individual processing stations that are configured, able, or designed, to create and/or modify a product and/or intermediate product sequentially and/or in parallel in order to fulfil the print job. A simple print job could, for example, request a certain image to be printed onto a certain type of paper and to be then cut out from the paper. A first processing station may then be a printer that automatically acquires the selected type of paper and prints the image onto it, and a second processing station may be a cutter that is configured to automatically cut out the image from the paper it has been printed onto. In this example, additional processing stations may be present.

For example, a user may have to gather the required type of paper from a paper depository, and another, or the same, user may have to transfer the printed paper from the printer to the cutter.

In other words, the processing stations may comprise, or consist of, automated devices and/or human personnel, i.e. human users.

The print job fulfiller entity may comprise, or consist of, a printing system that is configured to receive the request for the print job issued by the costumer entity and to automatically fulfil the required print job by producing the product or products indicated in the print job. The print job fulfiller entity may also comprise, or consist of, a print shop in which a plurality of workers cooperate to handle machines and transport raw materials to fulfil the print job.

The first and the second interface, as well as any further interfaces described herein in the following, may be provided as physically contacting interfaces, for example of the plug-and-socket-type, and/or as software interfaces, for example a web interface to which a print job may be uploaded or in which a print job may be specified. Any known transmission protocol may be used, chosen according to the specific intended application.

Since the first section of the graphical representation shows data related to the costumer entity, it may also be labelled as a costumer entity section of the graphical representation. Since the second section of the graphical representation shows data related to the print job fulfiller entity, it may also be labelled as a print job fulfiller entity section of the graphical representation.

An action or status being attributed to an entity means that the entity is currently performing that action or that the entity is currently required to perform that action, or, respectively, that the entity currently has that status or is required to adopt that status.

The statuses and/or actions indicated by the first and the second section of the graphical representation may, in a simple variant, indicate whether an action is currently required or not from the print job fulfiller entity, or, respectively, from the costumer entity.

For example, before a print job request is submitted, the first section may indicate that an action is required by the costumer entity, namely, the print job is required to be issued. Then, when the print job has been issued, it is for the print job fulfiller entity to receive and fulfil said print job. Accordingly, at least a time period immediately after the issuing of the print job by the costumer entity may be marked in some way as "action required" within the second section of the graphical representation. At the same time, the first section may be marked not at all, or may be marked in some way as "currently no action required". In other words, a status of the costumer entity and/or of the print job fulfiller entity may be "action required" or "no action required".

The sections of the graphical representation may also have the capability to indicate more than two different statuses. For example, time slots may be marked as one of the following:
- no current action
- idle phase (i.e. an action is required but the entity is currently still idle)
- negotiation phase
- decision phase
- production phase

These phases, in particular the negotiation phase, are preferably based on, or directly correlate with, internal states of at least one automated device such as a printer, a cutter, a curing device and so on. In particular when said device is part of an assembly line of automated devices, or contained in a location that is not easily accessible, the internal state of said device may not be otherwise ascertainable. By contrast, in conventional systems, in particular during negotiation phases, a long time might pass before it is resolved which entity, or part of an entity, is waiting for which other entity, or part of another entity.

The graphical representation may be generated according to a colour scheme in which each colour represents a status of the print job and/or a current action of the costumer entity and/or the print job fulfiller entity. For example, the five types of statuses for the time slots above may each be marked by a different colour within the graphical representation.

The graphical representation may be configured to show a sequence of time slots of fixed lengths, wherein each time slot is indicated by the graphical representation as having one of the plurality of available statuses. As an alternative, time may be portrayed as continuous in the graphical representation and portions of the first and the second sections with dimensions (e.g. lengths) corresponding to (preferably proportionate to) the length of the corresponding time period for which a particular status will last (or is expected to last, or has been going on so far).

The graphical representation may be updated and/or amended at any time, preferably in real-time. For example, a print job may be calculated to last exactly 20 seconds, and that information may be already presented by the second section of the graphical representation having a portion with a size corresponding to 20 seconds and a colour corresponding to the status "production phase". When, however, after 5 seconds a malfunction is determined (e.g. a paper blockage) then the duration of the production phase will naturally have to be extended, and so the corresponding portion of the graphical representation may be extended in size automatically in real-time as well. Such a malfunction may be determined by a device of the print job fulfiller entity and a malfunction signal indicating the occurrence (and preferably, in addition, properties) of the malfunction may be transmitted automatically to the control device which may then automatically update the graphical representation.

The new dimensions (or: size) of said portion may be chosen based on the detected malfunction, e.g. according to an average time to fix that particular malfunction. Alternatively, or when no average time for said malfunction is available, or when an unknown malfunction has been determined, then the new dimensions of said portion may extend to a standardized value, or to cover the whole section of the graphical representation.

The graphical representation may also comprise a status "malfunction" (or: "error" or the like) such that the status of the portion that had originally been indicated as "production phase" may be switched to the "malfunction" status.

Further variants and additional modifications of the various aspects of the present invention will be apparent from the subject-matter of the dependent claims as well as from the description and the corresponding figures.

In some advantageous embodiments, the first section is represented as a first timeline and the second section is represented as a second timeline arranged in parallel and as matching in time with the first timeline. This allows to easily recognize at a glance the internal states of the various entities involved in the print job. In other words, visual acquisition of the information displayed by the graphical representation is facilitated, for example for a robot that is navigated and/or controlled by visual data acquisition or for a human collaborator of the print job fulfiller entity.

In some advantageous embodiments, the graphical representation is generated such that a user may, when the graphical representation is displayed in a graphical user interface, GUI, initiate a bidirectional communication with the costumer entity and/or the print job fulfiller entity by manipulating the graphical representation in the GUI. More specifically, a user that is part of, or forms, the costumer entity, may initiate a bidirectional communication with the print job fulfiller entity by manipulating the graphical representation in the GUI, and/or a user that is part of the print job fulfiller entity may initiate a bidirectional communication with the costumer entity by manipulating the graphical representation.

"Manipulating" should be understood to include in particular a clicking via a computer mouse, or a touching of the graphical representation on a touch screen display displaying the GUI and/or the like. "Bidirectional" should be understood to designate a communication between at least two parties but should not, unless specified explicitly otherwise, by understood to mean a restriction of the communication between two and only two parties. For example, communication with three or more parties could be initiated by the manipulating of the graphical representation, wherein each of the parties may receive and send information.

The initiated bidirectional communication could be a communication between the costumer entity and two different parts of the print job fulfiller entity, e.g. a person responsible for a particular portion of the process of fulfilling the print job and a person responsible for the total process of fulfilling the print job. The initiated bidirectional communication may also comprise at least two automated devices that have certain requirements that negotiate with each other and with the consumer entity in order to fulfil a request for a consumer entity.

As an example, during the fulfilling of a print job it may occur that a certain type of paper that is able to be printed with a specific ink has run out. However, the printer requires a certain type of ink in order to fulfil the print job, whereas an automated device for selecting a suitable printing medium requires that said ink is not used because no suitable paper for it is available. In this situation, the consumer entity may negotiate with both automated devices to find a solution, or to abort the print job.

A solution could be found e.g. when the consumer entity is an automated device programmed to submit a print job with certain maximum requirements and to, when it turns out that the print job cannot be fulfilled with said maximum requirements, issue a second, or adapted, print job having lower requirements. On the print job fulfiller entity side, said automated devices would negotiate with each other to find out if said second, or adapted, print job may be fulfilled, and would, in case of a positive result, signal a solution, thus ending the negotiation phase and continuing with fulfilling the second, or adapted, print job.

In some advantageous embodiments, by initiating the communication a chat window is opened. In this way, a human user who is part of the costumer entity may quickly and efficiently conduct the negotiation during the negotiation phase with a human user who is part of the print job fulfiller entity.

In some advantageous embodiments, upon a user request, the graphical representation provides additional information about a status of the CE and/or a status of the PFE. Preferably, the graphical representation displays the additional information to a user when the graphical representation is manipulated by that user, e.g. clicked, touched, and the like. The additional information may comprise additional information which part or parts of the print job fulfiller entity is currently involved with the print job and which status or internal state this part, or these parts, currently has or have.

In some advantageous embodiments, the system comprises a communications device of the costumer entity, for example as mobile end device such as a smart phone, tablet, laptop PC or the like, or an automated sub-system of an automated costumer entity. The first interface may be configured to couple to the communications device of the costumer entity for bidirectional data exchange. The communications device may comprise a display unit configured to display the graphical representation. The communications device is preferably configured to allow a manipulation, e.g. clicking, of the graphical representation.

In some advantageous embodiments, the system comprises a display device of the print job fulfiller entity, for example a touchscreen or a monitor, either realized as a standalone unit or integrated into another device such as into a printer, cutter and so on. In the latter case, the system may also comprise said other device, i.e. the printer, cutter and so on. The display device is preferably configured to allow a manipulation, e.g. clicking, of the graphical representation.

The second interface may be configured to couple to the display device of the print job fulfiller entity for bidirectional data exchange. The display device may be configured to display the graphical representation.

In some advantageous embodiments, the system comprises a third interface and a monitoring device coupled to the third interface, wherein the monitoring device is configured to receive, via the third interface, a plurality of graphical representations that have been generated by the control device for a plurality of print jobs. In this way, a supervisor user may monitor the plurality of print jobs using the monitoring device and efficiently prioritize print jobs and/or resolve bottlenecks.

In some advantageous embodiments, the monitoring device is configured to allow a user to set an order of priority for the plurality of print jobs, wherein the order of priority is transmittable to the controlling device via the third interface and wherein the controlling device is configured to generate a priority signal and to transmit the priority signal via the second interface to the print job fulfiller entity. The print job fulfiller entity may be configured, or set up, to fulfil the plurality of print jobs according to the order of priority indicated by the priority signal.

### BRIEF DESCRIPTION OF THE DRAWINGS

The present invention will become more fully understood from the detailed description given hereinbelow and the accompanying schematic drawings which are given by way of illustration only, and thus are not limitative of the present invention, and wherein:
- Fig. 1: a schematic block diagram of a system according to the first aspect of the present invention;
- Fig. 2: a schematic depiction of a graphical representation generated and used by the system of Fig. 1;
- Fig. 3: a schematic depiction of a graphical representation provided by the system of Fig. 1 according to a variant;
- Fig. 4: a schematic flow diagram illustrating a method according to the second aspect of the present invention; and
- Fig. 5: a schematic block diagram illustrating a computer-readable storage medium according to the third aspect of the present invention or a computer program product according to the fourth aspect of the present invention.

Reference signs in connection with method steps are numbered for improved intelligibility and do not, unless explicitly or implicitly apparent otherwise, specify an according order in time. Specifically, one or more of the method steps may also be performed simultaneously.

### DETAILED DESCRIPTION OF THE DRAWINGS

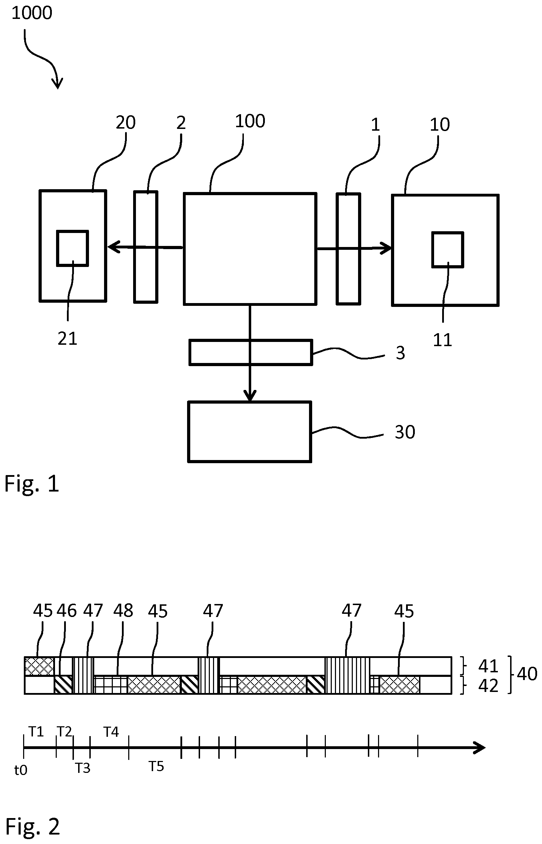

Fig. 1 shows a schematic block diagram of system 1000 for communication between a costumer entity 10 (or: CE 10) and a print job fulfiller entity 20 (or: PFE 20). The costumer entity 10 and/or the print job fulfiller entity 20 may be part of the system 1000, but may also be provided as separate from the system 1000.

The system 1000 comprises a first interface 1 adapted for receiving a request for a print job issued by the costumer entity 10 for the print job fulfiller entity 20. For example, the costumer entity 10 may comprise, or consist of, an end device such as a smartphone, tablet PC, desktop PC or laptop PC.

The system 1000 further comprises a second interface 2 adapted for receiving information regarding a status of the print job fulfiller entity 20 from the print job fulfiller entity 20. In the following, the print job fulfiller entity 20 will be described with reference to a print shop comprising several devices (such as at least one printer and/or at least one cutter and so on) and a number of users, i.e. human personnel, operating at least some of the devices of the print job fulfiller entity 20. It should be understood, however, that the print job fulfiller entity 20 may also consist exclusively of automated devices, as has been described in the foregoing.

The system 1000 also comprises a control device 100 configured to generate and adapt a graphical representation of the progress of the print job over time. The generating and adapting of the graphical representation is based on the received information regarding the status of the print job fulfiller entity 20. Optionally, the first interface 1 may also be configured to receive information about a status of the costumer entity 10, and further optionally the received information about the status of the costumer entity 10 is used to generate and/or adapt the graphical representation 40.

One example of a graphical representation 40 is shown in Fig. 2.

The graphical representation 40 comprises a first section 41 indicating statuses and/or actions attributed to the costumer entity 10, and a second section 42 indicating statuses and/or actions attributed to the print job fulfiller entity 20.

The control device 100 is configured to generate and adapt the graphical representation 40 such that negotiation phases 47 which comprise a negotiation between the costumer entity 10 and the print job fulfiller entity 20 are graphically indicated in both the first section 41 and the second section 42 of the graphical representation 40. This will be explained in more detail in the following.

The control device 100 is further configured to generate and output an output signal comprising, or encoding, the graphical representation 40 to the costumer entity 10 (e.g. via the first interface 1) and/or to the print job fulfiller entity 20 (e.g. via the second interface 2). Instead of the first and the second interfaces 1, 2, other interfaces may be used, in particular when a device used by the costumer entity 10 to issue the print job is not the same device as a device that receives the output signal, or, respectively, when a device used by the print job fulfiller entity 20 to send information about a status of the print job fulfiller entity 20 is not the same device as a device that receives the output signal.

Since it is usually the print job fulfiller entity 20 that provides the hardware and digital infrastructure for issuing and/or processing print jobs, the control device 100 may be physically located on the premises of the print job fulfiller entity 20. The control device 100 may also be realized in a distributed way or as a remote device, e.g. as a server or a network of servers that may or may not, partially or completely, be physically located on the premises of the print job fulfiller entity 20.

The output signal may be received, via the first interface 1, by a communications device 11 of the costumer entity 10. For example, the costumer entity 10 may be a user ordering the print job via the communications device 11, wherein the communications device 11 may comprise, or consist of, an end device such as a smartphone, tablet PC, desktop PC or laptop PC.

The output signal may also be received, via the second interface 2, by a display device 21 of the print job fulfiller entity 20, for example a display built into a printer or cutter, or a display of a PC system used for controlling at least one, or all, of the devices of the print job fulfiller entity 20. The display device 21 may also be a mobile end device such as a smartphone, tablet PC, desktop PC or laptop PC that is used by one of the user of the print job fulfiller entity 20.

As an alternative, the display device 21 may be integrated into, or identical with, the control device 100. For example, a computer-executable code may be run by a computing device, such as a desktop PC or a terminal, said computer executable code performing, when executed, a program (or: an app) that acts as both control device 100 and communications device.

In general, the control device 100 may be realized in hardware, such as a circuit or a printed circuit board and/or comprising transistors, logic gates and other circuitry. Additionally, the control device 100 may be at least partially realized in terms of software. Accordingly, the control device 100 may comprise, or be operatively coupled to, a processor and a memory storing a software or a firmware that is executed by the processor to perform the functions of the control device 100. Signals may be received by an input interface of the control device 100 and signals that the processor of the control device 100 creates may be outputted by an output interface of the control device 100. The control device 100 may be implemented, at least partially, as a microcontroller, an ASIC, an FPGA and so on.

An exemplary process of fulfilling a print job using the present invention is further described with respect to Fig. 2.

According to Fig. 2, the graphical representation 40 is generated such that the first section 41 and the second section 42 are both shown as parallel timelines in which a status, or internal state, of the costumer entity 10 and/or the print job fulfiller entity 20 may be indicated by marking the respective timeline in a predetermined way.

For example, as shown in Fig. 2, a first pattern (diagonal hashing) may designate production phases, or, in other words, phases wherein the entity (costumer entity 10 or print job fulfiller entity 20) marked therewith performs one of its functions. Geometrical patterns are used herein for improved legibility of the different statuses that the graphical representation 40 may display. However, it should be understood that the statuses may be indicated in other ways, for example by different colors, images, symbols and/or the like.

In Fig. 2, a first time period T1, starting at a starting time t0, is thus marked such that tis status is indicated as a production phase 45, on the side of the costumer entity 10. This represents the costumer entity 10 issuing the print job via the first interface 1 and the second interface 2 to the print job fulfiller entity 20. The data exchange between the first interface 1 and the second interface 2 may be conducted by the control device 100.

The first time period T1 is, on the side of the print job fulfiller entity 20, marked as white, or background-colored, indicating that the status of the print job fulfiller entity 20 is "no current action to perform". Note that this status may, in some embodiments, refer to the status of the print job fulfiller entity 20 with respect to the costumer entity 10 only, i.e. that there is no action for the costumer entity 10 to perform. In other embodiments, the same status may indicate that the print job fulfiller entity 20 has no action at all to perform, for no costumer entity 10.

In the next time period T2, an idle period 46 in the second section 42 may follow, indicated by a diagonally-striped box. This could mean that a user of the print job fulfiller entity 20 that has to verify or confirm the print job is currently unavailable to do so and/or may signify the time during which the print job is transmitted from the costumer entity 10 to the print job fulfiller entity 20.

In the next time period T3, a negotiation phase 47 occurs, indicated by a box with vertical stripes. For example, the print job fulfiller entity 20 may, after having reviewed the print job, have questions to the costumer entity 10 which the costumer entity 10 may have to answer before the print job fulfiller entity 20 can continue with fulfilling the print job. Often, a first negotiation phase 47 is provided before the print job fulfiller entity 20 enters into any production phase, wherein in said first negotiation phase 47 expectations are managed. As a result, certain terms and promises may be issued by the print job fulfiller entity 20 to the costumer entity 10.

As has been described in the foregoing, a user of the print job fulfiller entity 20 may start a bidirectional communication with the costumer entity 10 by manipulating (clicking, touching, etc. according to what type of communications device 11 is used) the graphical representation 40, for example a portion of the graphical representation 40 that indicates the negotiation phase 47. In an alternative, the user of the print job fulfiller entity 20 may manipulate the graphical representation 40 itself, and, as a result, the graphical representation 40 may be adapted to display a portion indicating a negotiation phase 47. In other words, the user of the print job fulfiller entity 20 may start the negotiation phase 47 by manipulating the graphical representation 40.

The bidirectional communication may be conducted by a chat window opening, a telephone call being arranged automatically, and/or the like. The result, or even the complete record of the bidirectional communication during the negotiation phase, may be recorded by the control device 100 and stored, for example for later verification, quality control, or in case of complaints. A copy of said result and/or record may also be automatically provided, via the first interface 1, to the costumer entity 10 for its documentation. The control device 100 may also be configured to monitor and automatically interpret the bidirectional conversation, and to issue control signals to at least one device of the print job fulfiller entity 20 based on the results of the interpretation.

For example, when the costumer entity 10 requests twenty copies in a specific print job, and the print job fulfiller entity 20 is unable to produce more than ten, a user tasked with print job screening may initiate the bidirectional communication by manipulating the graphical representation 40 and ask whether it would be acceptable to receive only ten copies. If the costumer entity 10 agrees, the control device 100 may automatically adapt the received print job such that it requests ten copies and may forward the print job adapted in this way to another part of the print job fulfiller entity 20 (e.g. a user and/or an automated device). The costumer entity 10 may receive a copy of the record as well as an automated message that it has been agreed at [time] on [date] that the number of copies is reduced from originally twenty to ten.

In a fourth time period T4, a decision phase 48 may follow in which the print job fulfiller entity 20 (or a part of it) decides how to proceed, based on the result of the negotiation phase 47, before the print job fulfiller entity 20 enters into a production phase 45 of its own in a fifth time period T5.

Additional phases may follow, wherein additional negotiation phases 47 may be comprised, as illustrated in Fig. 2. The final negotiation phase 47 may, for example, contain a negotiation about whether the costumer entity 10 is pleased with the final outcome of the production of the print job fulfiller entity 20, and the final production phase 45 of the print job fulfiller entity 20 may comprise preparing the result of the print job for shipping and dispatching it to the costumer entity 10.

As has been described in the foregoing, the graphical representation 40 may also be generated in different ways. For example only three patterns (or colors, symbols etc.) could be used, one indicating actions required on part of the costumer entity 10, one indicating actions required on part of the print job fulfiller entity 20, and one indicating a negotiation phase in which actions are required from both entities.

In some embodiments, manipulating the graphical representation 40 (in particular in a portion that is not indicating a negotiation phase) may result in the graphical representation 40 offering additional information. For example, the second section 42, which indicates the timeline for the print job fulfiller entity 20, may fold out to display timelines for any, or all, of the individual parts, or processing stations, of the print job fulfiller entity 20.

The individual processing stations of the print job fulfiller entity 20 may, for example, comprise at least one of:
- an order fulfiller (e.g. an account manager or order manager)
- a prepress operator who deals only with pre-press tasks
- a print operator who deals only with print tasks and who, in particular, operates a printer
- a finishing operator who deals only with finishing tasks such as trimming, folding, binding and the like
- a shipping operator who deals with preparing the package including the print job for shipping and dispatching it to the costumer entity 10

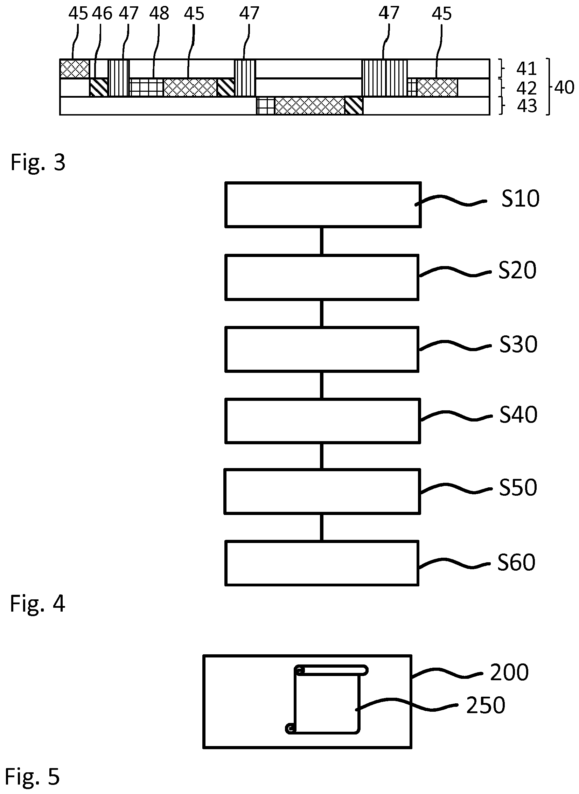

Fig. 3 shows a schematic example of a graphical representation 40 that comprises the first section 41 indicating actions required from, or performed by, the costumer entity 10, as well as a second section 42 and a third section 43 which indicate actions required, or performed by, a first and a second processing station of the print job fulfiller entity 20. It should be understood that for each processing station of the print job fulfiller entity 20, another section may be added to the graphical representation 40 in a detailed mode, and that each section may again be displayed as a parallel timeline matched with the other timelines.

The version of the graphical representation 40 shown in Fig. 2 (e.g. with exactly two timelines arranged in parallel, one for the costumer entity 10 and one for the print job fulfiller entity 20) may be designated as an "overview mode" by which the entities involved in the print job may quickly assess who is responsible for the next action and where a delay originates from. The version of the graphical representation 40 as shown in Fig. 3 may be designated as a "detailed mode" in which additional information is provided by the graphical representation 40. The output signal of the control device 100 may be generated by the control device 100 such as to comprise both the detailed mode and the overview mode of the graphical representation 40, and a user on the receiving side of the output signal may choose between one of the two representations.

Interactions between the costumer entity 10 and the print job fulfiller entity 20 and/or between individual processing stations of the print job fulfiller entity 20, may be classified e.g. according to any or all of the following statuses:
- Rq: - request; performed by transaction initiator (for example, the initial request for the print job by the costumer entity 10);
- Pm :- promise; a reply to the request, performed by transaction executor, describing the work that is committed to be done (for example, a reply from the print job fulfiller entity 20 to the initial request from the costumer entity 10);
- Dc: decline; negative alternative for the promise Pm;
- Qt: quit; appears after a decline Dc, is performed by transaction initiator (e.g. by the costumer entity 10) and ends the entire job/order;
- St: state; after a work (e.g. the total print job, or a sub-step such as printing, trimming, etc.) is done or a product is produced, the executor of the work or product signals the request initiator and shows the result;
- Ac: accept; the request initiator accepts the produced product/work;
- Rj: reject; negative alternative for the accept Ac; the initiator refuses the product/work;
- Sp: stop; performed by transaction executor and appears after a reject Rj from the initiator; ends the entire print job/order.

Any or all of these statuses may be shown by the graphical representation 40, either in the "overview mode" of Fig. 2 and/or in the "detailed mode" of Fig. 3.

A sequence of actions by the costumer entity 10 and by individual processing stations of the print job fulfiller entity 20 may, for example, run as follows:

### ----- start of job sequence -----

1. Print Buyer (PB), i.e. a costumer entity 10, prepares and issues a request (Rq) to the Order Fulfiller (OF)
2. order fulfiller (OF) is idle for a while (in relation to this job; they could be active in others)
3. OF and PB enter a negotiation phase, to manage expectations
4. OF decides the terms and issues a promise (Pm) to the OS. In order to decide, they might perform a breakdown into steps (Prepress, Print, Finishing etc.)
5. OF is idle for a while.
6. OF prepares and issues a request (Rq) to the PrePress Operator (PPO)
7. PPO is idle for a while
8. OF and PPO enter a negotiation phase, to manage expectations
9. PPO decides the terms and issues a promise (Pm) to the OF
10. PPO is idle for a while
11. PPO produces the required task and initiates a state (St), to signal the request initiator and show the result
12. OF decides if the produced result is according to the promise (Pm) and signals PPO that they accept (Ac) the product/service
13. OF is idle for a while
14. OF prepares and issues a request (Rq) to the Print Operator (PO)
15. PO is idle for a while
16. OF and PO enter a negotiation phase, to manage expectations
17. PO decides the terms and issues a promise (Pm) to the OF
18. PO is idle for a while
19. PO produces the required task and initiates a state (St), to signal the request initiator and show the result
20. OF decides if the produced result is according to the PO that they accept (Ac) the product/work
21. OF is idle for a while
22. OF prepares and issues a request (Rq) to the Finishing Operator 1 (F01)
23. F01 is idle for a while
24. OF and F01 enter a negotiation phase, to manage expectations
25. F01 decides the terms and issues a promise (Pm) to the OF
26. F01 is idle for a while
27. F01 produces the required task and initiates a state (St), to signal the request initiator and show the result
28. OF decides if the produced result is according to the promise (Pm) and signals F01 that he/she accepts (Ac) the product/work
29. OF is idle for a while
30. OF prepares and issues a request (Rq) to the Finishing Operator 2 (F02)
31. F02 is idle for a while
32. OF and FO2 enter a negotiation phase, to manage expectations
33. FO2 decides the terms and issues a promise (Pm) to the OF
34. FO2 is idle for a while
35. FO2 produces the required task and initiates a state (St), to signal the request initiator and show the result
36. OF decides if the produced result is according to the promise (Pm) and signals FO2 that they accept (Ac) the product/work
37. OF is idle for a while
38. OF prepares and issues a request (Rq) to the shipping operator (SH)
39. SH is idle for a while
40. OF and SH enter a negotiation phase, to manage expectations
41. SH decides the terms and issues a promise (Pm) to the OF
42. SH is idle for a while
43. SH produces the required task and initiates a state (St), to signal the request initiator and show the result
44. OF decides if the produced result is according to the commitment (Pm) and signals SH that they accept (Ac) the product/work
45. OF is idle for a while
46. OF initiates a state (St), to signal the request initiator (PB) that the products are shipped and order fulfilled.
47. PB decides if the produced result is according to the commitment (Pm) and signals OF that they accept (Ac) the product/service.
46. OF initiates a state (St), to signal the request initiator (PB) that the products are shipped and order fulfilled.
47. PB (i.e. costumer entity 10) decides if the produced result is according to the commitment (Pm) and signals OF that he/she accepts (Ac) the product/work.

### ----- end of job sequence -----

Apart from the overview mode, the graphical representation 40 may in this case, in the detailed mode, comprise seven sections, preferably seven timelines arranged in parallel, one for each PB (i.e. costumer entity 10), OF (order fulfiller), PPO (pre-press operator), PO (print operator), F01 (finishing operator 1, .e.g. a person or automated device tasked with trimming), FO2 (finishing operator 2, e.g. a person or automated device tasked with binding), and SH (shipping operator).

Referring back to Fig. 1, the system 1000 may optionally comprise a third interface 3 and a monitoring device 30 coupled to the third interface 3, wherein the monitoring device 30 is configured to receive, via the third interface 3, a plurality of graphical representations 40 that have been generated by the control device 100 for a plurality of print jobs. In this way, a supervisor user may monitor the plurality of print jobs using the monitoring device 30 and efficiently prioritize print jobs and/or resolve bottlenecks.

If the print job fulfiller entity 20 is a print shop, for example, then the print job fulfiller entity 20 will usually receive a plurality of requests for print jobs simultaneously or in close succession. The first interface 1 is preferably configured to receive print jobs from a plurality of costumer entities 10.

In some advantageous embodiments, the monitoring device 30 is configured to allow a user to set an order of priority for the plurality of print jobs, wherein the order of priority is transmittable to the controlling device 100 via the third interface 3 and wherein the controlling device 100 is configured to generate a priority signal and to transmit the priority signal via the second interface 2 to any part of the print job fulfiller entity 20. The print job fulfiller entity 20 may be configured, or set up, to fulfil the plurality of print jobs according to the order of priority indicated by the priority signal.

The status of the print job fulfiller entity 20 in its entirety, or, optionally, of its individual processing stations, may be submitted automatically and/or manually, via at the second interface 2, to the control device 100. For example, processing stations that are realized by human personnel may use one or more display devices 21 to update their status, for example to indicate that a work has been done or a product has been produced. Processing stations that are realized by automated devices may automatically send a signal indicating their status to the control device 100 via the interface 2. For example, a printer may send a signal indicating the successful completion of the printing part of a print job to the control device 100 via the second interface 2.

In the case that several individual processing stations of the print job fulfiller entity 20 have to cooperate, each processing station may be provided with a display device 21 that is configured to both allow updating of the status of the respective processing station as well as displaying the graphical representation 40 of the print job. The display devices 21 may thus be used to quickly and efficiently inform the next processing station (for example, a cutting processing station after a printing processing station) that it now has to perform an action.

Similarly to the negotiation phases 47 described between the print job fulfiller entity 20 and the costumer entity 10, there may occur negotiation phases between individual processing stations as well. In the detailed mode, such negotiation phases may be indicated in a similar way as has been described for the negotiation phases 47, i.e. graphically (by patterns, colors, symbols etc.) in both the timelines (or sections of the graphical representation 40) of the individual processing stations involved in the negotiation phase.

Moreover, also such negotiation phases between individual processing stations may be facilitated by the graphical representation 40 in the way described in the foregoing, e.g. by the graphical representation 40 initializing bidirectional communication (e.g. by opening a chat windows or a voice call line) when it is manipulated. Also the results of these negotiation phases may be stored within, or by, the control device 100 and/or may be submitted to other processing stations of the print job fulfiller entity 20 and/or to the costumer entity 10.

For example, when it is decided within a certain negotiation phase to use UV-curable ink, then the control device 100 may adapt the graphical representation 40 to include, in the detailed mode, a timeline for a curing processing station configured to cure printing mediums with UV-curable ink printed thereon. The control device 100 may, in particular, activate a display device 21 of, or associated with, that curing processing station and send the output signal encoding the graphical representation 40 to that display device 21. The curing processing station (e.g. a person operating a curing device, or an automated curing device) may send a signal to the control device 100 indicating that it is ready to perform the required action, which will prompt the control device 100 to adapt the graphical representation 40 accordingly.

Fig. 4 shows a schematic flow diagram illustrating a method for communication between a costumer entity 10 and a print job fulfiller entity 20 according to the second aspect of the present invention. The method according to the second aspect may be performed using the system 1000 of the first aspect, in particular as has been described with respect to Fig. 1 to Fig. 3, but is not restricted thereto. The usage of reference signs of Fig. 1 to Fig. 3 in connection with the method of Fig. 4 should be understood as illustrative and as a preferred option but not as limiting. The method according to the second aspect may be modified according to any of the modifications, options or variations as described with respect to the system according to the first aspect, and vice versa.

In a step S10 of the method, a print job is issued by a costumer entity 10 for a print job fulfiller entity 20, e.g. by the communications device 11 as has been described in the foregoing.

In a step S20, the print job issued by the costumer entity 10 is received by a control device 100, e.g. via a first interface 1 as has been described in the foregoing.

In a step S30, information regarding a status of the print job fulfiller entity 20 is received by the control device 100, for example a status of a part of the print job fulfiller entity 20 as has been described in the foregoing.

In a step S40, the control device 100 generates and/or adapts a graphical representation of the progress of the print job over time, preferably as has been described with respect to Fig. 2 and Fig. 3 in the foregoing.

In a step S50, an output signal comprising, or indicating, the graphical representation 40 is generated, in particular as has been described in the foregoing.

In a step S60, the output signal is output to the costumer entity 10, e.g. via the first interface 1 and/or to the print job fulfiller entity 20, e.g. via the second interface 2.

Fig. 5 shows a schematic block diagram illustrating a computer-readable storage medium 2000 according to the third aspect of the present invention. The storage medium 200 comprises executable program code 250 configured to, when executed, perform a method according to the second aspect of the present invention, in particular the method according to Fig. 4. The computer-readable storage medium max, in particular, be any kind of semiconductor memory, a DVD, a Blu-Ray disc and the like.

Fig. 5 may also be interpreted as illustrating a computer program product according to a fourth aspect of the present invention. The object labelled with reference sign "200" may be interpreted as illustrating the computer program product, and the object labelled with the reference sign "250" may be interpreted as illustrating executable program code configured to, when executed, perform a method according to the second aspect of the present invention, in particular the method according to Fig. 4.

While detailed embodiments of the present invention are disclosed herein, it is to be understood that the disclosed embodiments are merely exemplary of the invention, which can be embodied in various forms. Therefore, specific structural and functional details disclosed herein are not to be interpreted as limiting, but merely as a basis for the claims and as a representative basis for teaching one skilled in the art to variously employ the present invention in virtually any appropriately detailed structure. In particular, features presented and described in separate dependent claims may be applied in combination and any advantageous combination of such claims are herewith disclosed.

Further, the terms and phrases used herein are not intended to be limiting; but rather, to provide an understandable description of the invention. The terms "a" or "an", as used herein, are defined as one or more than one. The term plurality, as used herein, is defined as two or more than two. The term another, as used herein, is defined as at least a second or more. The terms including and/or having, as used herein, are defined as comprising (i.e., open language).

It will be evident that the described embodiments may be varied in many ways. All such modifications as would be evident to one skilled in the art starting from what is explicitly described are intended to be included.

## Claims

1. System (1000) for communication between a costumer entity, CE (10), and a print job fulfiller entity, PFE (20), comprising:
a first interface (1) adapted for receiving a print job issued by the CE (10) for the PFE (20);
a second interface (2) adapted for receiving information regarding a status of the PFE (20) from the PFE (20);
a control device (100) configured to generate and adapt a graphical representation (40) of the progress of the print job over time;
wherein the graphical representation (40) comprises a first section (41) indicating statuses and/or actions attributed to the CE (10), and a second section (42, 43) indicating statuses and/or actions attributed to the PFE (20);
wherein the control device (100) is configured to generate and adapt the graphical representation (40) such that negotiation phases (47) which comprise a negotiation between the CE (10) and the PFE (20) are graphically indicated in both the first section (41) and the second section (42) of the graphical representation (40); and
wherein the control device (100) is further configured to generate and output an output signal comprising the graphical representation (40) to the CE (10) and/or to the PFE (20).

2. The system (1000) of claim 1,
wherein the first section (41) is represented as a first timeline and the second section (42) is represented as a second timeline arranged in parallel and as matching in time with the first timeline.

3. The system (1000) of claim 1 or claim 2,
wherein the graphical representation (40) is generated such that a user may, when the graphical representation (40) is displayed in a graphical user interface, GUI, initiate a bidirectional communication with the CE (10) and/or the PFE (20) by manipulating the graphical representation (40) in the GUI.

4. The system (1000) of any one of claims 1 to 3,
wherein the graphical representation (40) is generated such that the user may initiate the bidirectional communication by manipulating a portion of the graphical representation (40) that indicates the negotiation phase (47).

5. The system (1000) of any one of claims 1 to 4,
wherein by initiating the communication a chat window is opened.

6. The system (1000) of any one of claims 1 to 5,
wherein, upon a user request, the graphical representation (40) provides additional information about a status of the CE (10) and/or a status of the PFE (20).

7. The system (1000) of any one of claims 1 to 6,
comprising a communications device (11) of the CE (10),
wherein the first interface is configured to couple to the communications device (11) of the CE for bidirectional data exchange, and wherein the communications device (11) comprises a display unit configured to display the graphical representation (40).

8. The system (1000) of any one of claims 1 to 7,
comprising a display device (21) of the PFE (20), wherein the second interface (2) is configured to couple to the display device (21) of the PFE (20) for bidirectional data exchange, and wherein the display device (21) is configured to display the graphical representation (40).

9. The system (1000) of any one of claims 1 to 8,
comprising a third interface (3) and a monitoring device (30) coupled to the third interface (3), wherein the monitoring device (30) is configured to receive, via the third interface (3), a plurality of graphical representations (40) that have been generated by the control device (100) for a plurality of print jobs.

10. The system (1000) of any one of claims 1 to 9,
wherein the monitoring device (30) is configured to allow a user to set an order of priority for the plurality of print jobs, wherein the order of priority is transmittable to the controlling device (100) via the third interface (3) and wherein the controlling device (100) is configured to generate a priority signal and to transmit the priority signal via the second interface (2) to the PFE (20).

11. A method for communication between a costumer entity, CE (10), and a print job fulfiller entity, PFE (20), comprising steps of:
receiving , by a control device, a print job issued by the CE (10) for the PFE (20);
receiving (S20), by the control device (100), information regarding a status of the PFE (20) from the PFE (20);
generating and/or adapting (S30), by the control device (100), a graphical representation (40) of the progress of the print job over time;
wherein the graphical representation (40) comprises a first section (41) indicating statuses and/or actions attributed to the CE (10), and a second section (42) indicating statuses and/or actions attributed to the PFE (20);
wherein the graphical representation (40) is generated and/or adapted such that negotiation phases (47) which comprise a negotiation between the CE (10) and the PFE (20) are graphically indicated in both the first section (41) and the second section (42) of the graphical representation;
generating an output signal comprising the graphical representation (40); and outputting the output signal to the CE (10) and/or to the PFE (20).

12. The method of claim 11, comprising the steps of:
determining a manipulating, by a user, of a portion of the graphical representation (40); and
initiating a bidirectional communication with the CE (10) and/or with the PFE (20) as a response thereto.

13. The method of claim 11 or 12, comprising the steps of:
receiving a user request for additional information about a status of the CE (10) and/or a status of the PFE (20); and
adapting the graphical representation (40) to provide the requested additional information.

14. A computer-readable storage medium (200) comprising executable program code (250) configured to, when executed, perform the method according to any one of claims 11-13.
